# EUROPÄISCHE PATENTSCHRIFT

(11) **EP 2 099 811 B1**
(45) Veröffentlichungstag und Bekanntmachung des Hinweises auf die Patenterteilung: **19.05.2010**
(21) Anmeldenummer: 07822203.1
(22) Anmeldetag: 05.11.2007
(51) Int. Cl.: C07F 7/21, C08K 5/54, A01N 25/16, C08L 75/06

(54) **CYCLISCHE SILOXANE UND DEREN VERWENDUNG**
CYCLIC SILOXANES AND USE THEREOF
SILOXANES CYCLIQUES ET LEUR UTILISATION

(30) Priorität: 20.12.2006 DE 102006060115
(43) Veröffentlichungstag der Anmeldung: 16.09.2009
(73) Patentinhaber: Evonik Goldschmidt GmbH, 45127 Essen (DE)
(72) Erfinder: BRÜCKNER, Arndt, 45473 Mülheim A.d. Ruhr (DE); GLOS, Martin, 46325 Borken (DE); HENNING, Frauke, 45130 Essen (DE); SIEVERDING, Ewald, 55578 St. Johann (DE)
(86) Internationale Anmeldenummer: PCT/EP2007/061874
(87) Internationale Veröffentlichungsnummer: WO 2008/074565

(56) Entgegenhaltungen:
- DE-A1- 1 493 380
- DE-C1- 19 631 227
- GB-A- 971 309

## Beschreibung

Die Erfindung betrifft cyclische Siloxane und deren Verwendung bei der Polyesterpolyurethanherstellung sowie als Additiv zur Verstärkung der Wirkung von Bioziden.

Organomodifizierte Siloxane werden aufgrund ihrer einzigartigen Eigenschaften wie Wasserabstoßung, Grenzflächenaktivität, Temperaturstabilität etc. in zahlreichen technischen Anwendungen eingesetzt. Dazu zählen die Stabilisierung von PolyurethanSchäumen, der Einsatz als Emulgatoren, in Trennbeschichtungen und viele weitere.

Diese Siloxane weisen in der Regel eine lineare oder verzweigte, terminal oder kammförmig modifizierte Struktur auf. So beschreibt beispielsweise EP 0 048 984 und die darin zitierten Patentschriften verschiedene lineare Siloxane mit unterschiedlichen seitenständigen Gruppen (Cyano-Gruppen, Polyoxyalkylen-Gruppen und Phenyl-Gruppen) zur Verwendung in Polyesterpolyurethanschaum.

In US 5,908,871 wird ein Polyethersiloxan basierend auf Heptamethyltrisiloxan zur Verwendung als Stabilisator in PU-Esterschaum beschrieben. Hierbei werden bei der Verschäumung die Siloxane in Mengen von 1 bis 1,5 Teilen bezogen auf 100 Teile des Polyols eingesetzt.

Die deutsche Offenlegungsschrift DE 14 93 380 beschreibt polyethermodifizierte cyclische Siloxane der allgemeinen Formel (I) 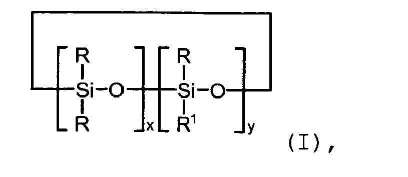 worin
- R: eine Methyl- oder Ethylgruppe,
- R¹: ein Rest CₘH₂ₘ(OC₂H₄)ₙ(OC₃H₆)ₚOR² und
- R²: ein Methyl-, Ethyl-, Propyl- oder Butylrest ist,
deren Herstellung und deren Verwendung als Benetzungsmittel, insbesondere für wässrige Anstrichstoffe, Klebstoffe, Druckfarben, Farbbäder und Emulsionen.

Die deutsche Patentschrift DE 196 31 227 beansprucht die Verwendung solcher cyclischer Siloxane mit Polyetherresten als Schaumstabilisatoren, insbesondere für Polyurethanschaum. Sie betont den Kostenvorteil cyclischer Siloxane gegenüber linearen Siloxanen der Gestalt, dass cyclische Siloxan-Rohstoffe bei ihrer Herstellung kein Trimethylchlorsilan benötigen, das nur zu 2 bis 4 % bei der Silan-Synthese nach Rochow anfällt.

In beiden Schriften ist der Rest R¹ über ein Kohlenstoffatom direkt an ein Siliziumatom gebunden (SiC-Verknüpfung). Die SiC-Verknüpfung resultiert aus einer Hydrosilylierung von meist Allylalkohol gestarteten Polyethern. Verglichen mit beispielsweise Butanol gestarteten Polyethern sind Allylalkohol gestartete Polyether jedoch nur zu höheren Kosten herstellbar. Darüber hinaus ist die Verwendung von Allylalkohol toxikologisch bedenklich. Ein weiterer Nachteil besteht darin, dass bei den beschriebenen Hydrosilylierungsreaktionen ein hoher Überschuss an Polyether zur Erreichung eines vollständigen Umsatzes nötig ist. Dies beruht auf der Umlagerung des Allylethers zum entsprechenden Propenylpolyether. Diese vermindert nicht nur den Aktivgehalt der Produkte, sondern kann auch durch Hydrolyse des Propenylpolyethers zu einer Freisetzung von Propionaldehyd führen, die einen in der Applikation unerwünschten Eigengeruch zur Folge hat. Schließlich wird für die Hydrosilylierung ein kostspieliger Edelmetallkatalysator, meist basierend auf Platin, benötigt.

Es bestand daher der Bedarf an cyclischen Polyethersiloxanen, die auf technisch einfache und wirtschaftliche Weise herstellbar sind und über eine ausgeprägte Grenzflächenaktivität verfügen.

Überraschenderweise wurde gefunden, dass die erfindungsgemäße Aufgabe durch cyclische Siloxane gelöst werden kann, deren organomodifizierende Gruppe über ein Sauerstoffatom an das Siliziumatom gebunden ist (SiOC-Verknüpfung).

Gegenstand der Erfindung sind demzufolge cyclische Siloxane der allgemeinen Formel (II) 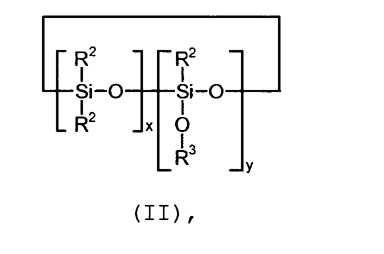 wobei
- R²: gleiche oder verschiedene, geradkettige oder verzweigte, aliphatische oder aromatische, gegebenenfalls halogenierte, gegebenenfalls ungesättigte Kohlenwasserstoffreste mit 1 bis 8 Kohlenstoffatomen, vorzugsweise mit einem Kohlen- stoffatom, sind,
- x: 3, 4 oder 5,
- y: 1, 2 oder 3,
- R³: eine Gruppe der Formel A-B-C-D darstellt, wobei A eine Gruppe 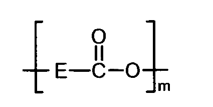
ist, wobei
- m: eine ganze Zahl von 0 bis 30 ist und
- E: jeweils unabhängig eine zweiwertige Gruppe, ausgewählt aus linearen oder verzweigten, gesättigten, ein- oder mehrfach ungesättigten Alkyl-, Aryl-, Alkylaryl- oder Arylalkylgruppen mit 1 bis 20 Kohlenstoffatomen, vor- zugsweise mit 3 bis 5 Kohlenstoffatomen, sein kann,
- B: eine Gruppe der allgemeinen Formel (III)

-(C₂H₄O)ₙ(C₃H₆O)ₒ(C₁₂H₂₄O)ₚ(C₈H₈O)_{q}(C₄H₈O)ᵣ- (III)
ist, wobei
- n,: o, p, q und r voneinander unabhängige ganze Zahlen von 0 bis 50 sind, und falls mehr als einer der Indices n, o, p, q, r > 0 ist, die allgemeine Formel III ein statistisches Oligomer oder ein Blockoligomer darstellt,
- C: ausgewählt aus der Gruppe 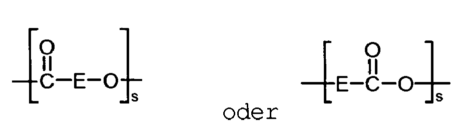
ist, wobei
- E: jeweils unabhängig die oben angegebenen Bedeutungen haben kann und
- s: eine ganze Zahl von 0 bis 20 ist, aber nur dann von 0 verschieden ist, falls die Summe der Indizes n + o + p + q + r größer oder gleich 1 ist,
und
- D: ein Rest sein kann, ausgewählt aus Wasserstoff, linearen oder verzweigten, gesättigten, ein- oder mehrfach unge-sättigten Alkyl-, Aryl-, Alkylaryl- oder Arylal-kylgruppen mit 1 bis 20 Kohlenstoffatomen, gegeenen-falls ein oder mehrere Heteroatome enthaltend, ge-gebenenfalls ein oder mehrere Carbonylgruppen ent-haltend, gegebenenfalls mit einer ionischen organischen Gruppe modifiziert, die beispielsweise die Heteroatome Schwefel, Phosphor und/oder Stickstoff enthalten kann,
wobei die Summe der Indizes m + n + o + p + q + r + s größer oder gleich 3 sein muss. Vorzugsweise ist die Summe der Indizes m + n + o + s größer oder gleich 3. Besonders bevorzugt ist die Summe der Indizes n + o größer oder gleich 3.
- D: ist vorzugsweise ausgewählt aus der aus

| | | |
|---|---|---|
| -CH₃ | | 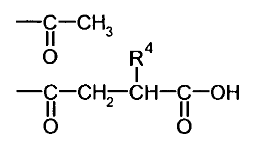 |
| -(CH₂)₃-CH₃ | | |
| -CH₂CH=CH₂ | | |
| -SO₃H | | 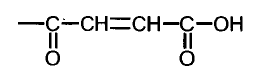 |
| -SO₃⁻ | ¹/_{w} M^{w+} | |
| -(CH₂)₂-SO₃⁻ | ¹/_{w} M^{w+} | 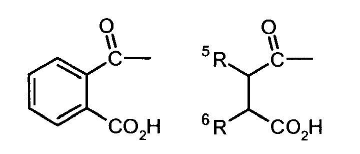 |
| -(CH₂)₃-SO₃⁻ | ¹/_{w} M^{w+} | |
| -(CH₂)₄-SO₃⁻ | ¹/_{w} M^{w+} | |
| -PO₃²⁻ | ²/_{w} M^{w+} | 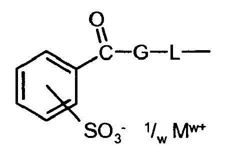 |
| -PO₃H⁻ | ¹/_{w} M^{w+} | |
| -PO₃H₂ | | |

bestehenden Gruppe, wobei
- M^{w+}: für ein w-wertiges Kation mit w = 1, 2, 3, oder 4 steht, insbesondere K⁺, Na⁺, NH₄⁺, (i-C₃H₇)NH₃⁺ oder (CH₃)₄N⁺, und
- R⁴: für Wasserstoff oder einen, gegebenenfalls verzweigten aliphatischen Rest mit 1 bis 20 Kohlenstoffatomen steht,
- R⁵: und R⁶ für gleiche oder verschiedene, gegebenenfalls verbrückte, gegebenenfalls verzweigte aliphatische Reste stehen,
- G: ein Sauerstoffatom, NH oder eine NR⁷ Gruppe ist, wobei
- R⁷: eine einwertige Alkylgruppe ist,
- L: einen zweiwertigen, gegebenenfalls verzweigten, Alkyl- rest darstellt.
- D: ist insbesondere bevorzugt ausgewählt aus der aus

-CH₃

-(CH₂)₃-CH₃

-CH₂-CH=CH₂

-SO₃^{- 1}/_{w} M^{w+}

-(CH₂)₂-SO₃^{- 1}/_{w} M^{w+}

-(CH₂)₃-SO₃⁻ 1/_{w} M^{w+}
bestehenden Gruppe mit den oben angegebenen Bedeutungen und ganz besonders bevorzugt ausgewählt aus der aus Allyl, n-Butyl, Ethyl und Methyl bestehenden Gruppe.

In einer bevorzugten Ausführungsform der vorliegenden Erfindung steht der Rest R² der allgemeinen Formel II für Methylgruppen, y hat den Wert 1, m = s = 0 und D steht für die oben angegebenen Bedeutungen.

In einer besonders bevorzugten Ausführungsform der vorliegenden Erfindung steht der Rest R² der allgemeinen Formel II für Methylgruppen, y hat den Wert 1, m = p = q = r = s = 0 und der Rest D steht für Allyl, n-Butyl, Ethyl, oder Methyl.

Es ist dem Fachmann geläufig, dass die Verbindungen in Form eines Gemisches mit einer im Wesentlichen durch statistische Gesetze geregelten Verteilung vorliegen. Beispielsweise kann bei der Herstellung und der Verwendung ein Gemisch aus Cyclotetra-, Cyclopenta- und Cyclohexasiloxanen vorliegen. Als besonders günstig im Sinne der Erfindung hat es sich herausgestellt, wenn die Siloxane der allgemeinen Formel II als Mischung eingesetzt werden. Somit kann eine aufwendige fraktionierende Destillation entfallen.

Die Einheit -O-SiR²(OR³)- ist ein- bis dreimal im Siloxancyclus enthalten. Es liegt jedoch eine Mischung von Molekülen vor, so dass ein gewisser Anteil der Moleküle keine oder mehrere Einheiten -O-SiR²(OR³)- besitzt, wenn beispielsweise im Mittel y = 1 ist.

Die Herstellung der erfindungsgemäßen cyclischen Siloxane kann nach den für lineare oder verzweigte, terminal oder kammförmig modifizierte Siloxane bekannten Verfahren erfolgen. So stehen für die Bildung einer SiOC-Verknüpfung mehrere Methoden zur Verfügung. Klassischerweise werden SiOC-Verknüpfungen durch die Reaktion eines Siloxans mit einer am Siliziumatom gebundenen Abgangsgruppe (z.B. Halogen) und einem Alkohol gebildet. Besonders Chlorsiloxane sind für diesen Reaktionstyp weit verbreitet. So können die erfindungsgemäßen organomodifizierten Siloxane beispielsweise durch Substitution des Chloratoms in Chlorheptamethylcyclotetrasiloxan oder in Chlornonamethylcyclopentasiloxan mit einem Alkohol, beispielsweise einem Alkyl-gestarteten Polyether, hergestellt werden.

Alternativ können die erfindungsgemäßen cyclischen Siloxane durch Umsetzung eines Alkohols mit Siloxanen, in denen Wasserstoff an das Siliziumatom gebunden ist (Wasserstoffsiloxane), hergestellt werden. Unter geeigneten Bedingungen kommt es hier zur Ausbildung der SiOC-Bindung und zur Abspaltung von Wasserstoff. Diese dehydrogenative Kondensation läuft nur in Anwesenheit eines Katalysators ab. Hierfür kommt beispielsweise das in der europäischen Patentschrift EP 1 460 098 beschriebene Verfahren in Frage, bei dem organisch modifizierte Polyorganosiloxane durch Umsetzung von Wasserstoffsiloxanen mit Alkoholen mit einer katalytischen Menge einer Mischung einer organischen Säure und ihres Salzes hergestellt werden. Alternativ können die in DE 103 12 636 und DE 103 59 764 beschriebenen borhaltigen Katalysatoren für die dehydrogenative Kondensation von Wasserstoffsiloxanen und Alkoholen eingesetzt werden. Des Weiteren kann das in der noch nicht veröffentlichten Patentanmeldung DE 10 2005 051 939.3 beschriebene Verfahren verwendet werden, bei dem die dehydrogenative Kondensation durch quartäre Ammoniumhydroxide katalysiert wird. Die US 5,147,965 verweist auf ein Verfahren, das in der japanischen Patentveröffentlichung 48-19941 beschrieben wird und bei dem ein Wasserstoffsiloxan mit einem Alkohol unter Zugabe von Alkalimetallhydroxiden oder Alkalimetallalkoxiden umgesetzt wird. Der Inhalt der oben angeführten Patentliteratur zur Knüpfung der SiOC-Bindung wird hiermit als Referenz angeführt und gilt als Teil des Offenbarungsgehaltes der vorliegenden Anmeldung.

Bevorzugt ist das Verfahren der dehydrogenativen Kondensation von Wasserstoffsiloxanen und Alkoholen katalysiert mit borhaltigen Verbindungen, wie in DE 103 12 636 und DE 103 59 764 beschrieben oder gegebenenfalls unter Zusatz eines Cokatalysators, wie in der Anmeldeschrift EP 1 627 892 ausgeführt. Als Alkohole kommen dabei bevorzugt OH-terminierte Polyether zum Einsatz.

Bevorzugt ist die Verwendung einer Mischung von cyclischen Siloxanen der allgemeinen Formel (IV) 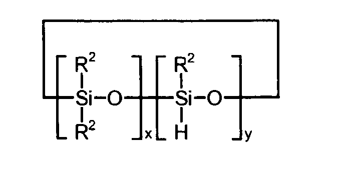 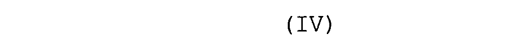 mit den Molekülen:
a) mit x = 3 und y = 1
b) mit x = 4 und y = 1
c) mit x = 5 und y = 1 und gegebenenfalls
d) mit x = 4 und y = 0 (Octamethylcyclotetrasiloxan)
e) mit x = 5 und y = 0 (Decamethylcyclopentasiloxan) und
f) mit x = 6 und y = 0 (Undecamethylcyclohexasiloxan)

Ganz besonders bevorzugt ist die Verwendung einer Mischung, in der der Anteil an Verbindungen der allgemeinen Formel (IV) mit y = 1 und x = 3,4 und 5 insgesamt bei 10 bis 80 Gew.-% liegt und der Rest silanwasserstofffreie Siloxane sind.

Die Anteile an flüchtigem, nicht Silanwasserstoff tragendem Ausgangsmaterial, wie beispielsweise Octamethylcyclotetrasiloxan, Decamethylcyclopentasiloxan oder Undecamethylcyclohexasiloxan können vorzugsweise nach der dehydrogenativen Kondensation destillativ, gegebenenfalls unter vermindertem Druck, entfernt werden.

Die Herstellung kann mit oder ohne Lösungsmittel, kontinuierlich oder diskontinuierlich erfolgen. Die Reaktanden können in beliebiger Reihenfolge miteinander gemischt werden.

Ein weiterer Gegenstand der vorliegenden Erfindung ist die Verwendung der Verbindungen der allgemeinen Formel II beziehungsweise die Verwendung technischer Mischungen, die diese Verbindungen enthaltend, bei der Herstellung von Polyesterpolyurethanschäumen.

Die erfingungsgemäßen Siloxane können in geringeren Mengen, als die bisher bekannten Systeme, im Polyesterpolyurethanschaum eingesetzt werden, ohne dass es zu fehlerhaften Schäumen kommt.

Polyesterpolyurethanschäume werden hergestellt durch die Umsetzung einer Reaktionsmischung bestehend aus
a) einem Polyesterpolyol, welches im Durchschnitt mindestens zwei Hydroxy-Gruppen pro Molekül trägt,
b) einem Polyisocyanat, das im Durchschnitt mindestens zwei Isocyanat-Gruppen pro Molekül trägt, wobei das Polyol und das Polyisocyanat den größten Teil der Reaktionsmischung ausmachen und das Verhältnis der beiden Komponenten zueinander geeignet ist um einen Schaum herzustellen,
c) einem Treibmittel in geringen Mengen, das für die Schäumung der Reaktionsmischung ausreicht,
d) einer katalytischen Menge eines Katalysators zur Herstellung des Polyurethanschaums; dieser besteht meist aus einem oder mehreren Aminen, und
e) einer geringen Menge eines Schaumstabilisators, bestehend aus Siloxanen und/oder anderen Tensiden, der die schäumende Mischung ausreichend stabilisiert. So können auch die erfindungsgemäßen Siloxane allein oder in Kombination mit nicht Si-haltigen Tensiden als Stabilisator eingesetzt werden. Die erfindungsgemäßen Siloxane können auch in geeigneten Lösungsmitteln verdünnt werden, um die Dosierbarkeit zu vereinfachen oder auch die Einarbeitbarkeit in das Reaktionsgemisch zu verbessern.

Weitere Additive können sein: Flammschutzmittel, Zellöffner, Farbstoffe, UV-Stabilisatoren, Substanzen zur Verhinderung eines mikrobiellen Befalls sowie weitere Zusätze, die für den Fachmann naheliegend und hier nicht weiter aufgeführt sind.

Es können die nach dem Stand der Technik bekannten Polyesterpolyole, Isocyanate, Treibmittel, Flammschutzmittel, Katalysatoren, Additive und Herstellungsverfahren zum Einsatz kommen. Beispielsweise können die in der Patentschrift EP 0 048 984, die hiermit als Referenz angeführt wird, genannten Komponenten verwendet werden.

Ein weiterer Gegenstand der vorliegenden Erfindung ist die Verwendung der Verbindungen der allgemeinen Formel II beziehungsweise die Verwendung technischer Mischungen, die diese Verbindungen enthalten, als Additiv zur Verstärkung der Wirkung von Bioziden und Düngemittel, wie Mikronährstoffdüngern, und als spreitendes oder nichtspreitendes Netzmittel in der Agrotechnik. Als Biozide sind bezeichnet insbesondere, aber nicht ausschließlich, Pestizide und Wirkstoffe, die in der Landwirtschaft zur Verhinderung von Schaden bei Aussaat, Anbau, Produktion, Lagerung von Kultur- und Nicht-Kulturpflanzen und deren Ernte- und Verarbeitungsprodukten eingesetzt werden und die in der Industrie und im Haushalt zum Schutz gegen Pflanzen einschließlich Algen und Moose, Tiere, Insekten, Pilze, Bakterien, Viren und dergleichen Schaderreger eingesetzt werden. Solche Wirkstoffe schließen synthetische und biologische Stoffe ein. Solche Wirkstoffe können auch in chemischen Zusammensetzungen allein oder in Verbindung mit anderen Wirkstoffen und in verschiedenen Darreichungs- und Applikationsformen ohne oder mit anderen Netzmitteln dargeboten werden. Nach dem Stand der Technik werden organomodifizierte Siloxane mit linearer Struktur, die meist seitenständig organomodifiziert sind, als Silikonnetzmittel für Agro-Anwendungen eingesetzt. Der Inhalt der Schriften EP 1 314 356, US 5,017,216, WO 89/12394, WO 99/40785, US 6,051,533, US 6,040,272 und EP 0 483 095 wird hiermit als Referenz angeführt und gilt als Teil des Offenbarungsgehaltes der vorliegenden Anmeldung. Diese Siloxane erfordern bei ihrer Herstellung kostspieliges Trimethylchlorsilan als Endstopper der Silikonkette. Wie bereits erwähnt, fällt Trimethylchlorsilan bei der Silan-Synthese nach Rochow nur zu 2 bis 4 % an. Überraschend wurde gefunden, dass cyclische Siloxane der allgemeinen Formel II, bei deren Herstellung kein Trimethylchlorsilan benötigt wird, die Wirkung von Bioziden verstärken. Völlig unerwartet wurde gefunden, dass erfindungsgemäße cyclische Siloxane sogar aktiver als dem Stand der Technik entsprechende nichtcyclische lineare Trisiloxan-Tenside sind. Folglich ist davon auszugehen, dass die erfindungsgemäßen Verbindungen der allgemeinen Formel II alle Biozide und weitere synthetische und biologische aktive Inhaltsstoffe, wie beispielsweise all jene, die in "The Pesticide Manual", 14. Auflage, British Crop Protection Council und in "The Manual of Biocontrol Agents" von L.G. Copping, British Crop Protection Council, aufgeführt werden, in ihrer Wirksamkeit verstärken. Ebenso wie sie die Versorgung der Pflanze mit Pflanzenschutzmitteln verbessern, verbessern die erfindungsgemäßen Verbindungen der allgemeinen Formel II die Aufnahme und Wirksamkeit von Nährstoffen und Mikronährstoffen. Ferner können die erfindungsgemäßen Verbindungen der allgemeinen Formel II als Netzmittel zur Blatt- und Bodenbehandlung eingesetzt werden.

Darüber hinaus können die erfindungsgemäßen Verbindungen der allgemeinen Formel II beziehungsweise die Verwendung technischer Mischungen, die diese Verbindungen enthalten, als Netz-, Entschäumungs- und Emulgiermittel sowie zur Stabilisierung wässriger Schäume zum Einsatz kommen. Insbesondere sind die erfindungsgemäßen Verbindungen der allgemeinen Formel II beziehungsweise die Verwendung technischer Mischungen, die diese Verbindungen enthalten, als Zusätze für Farben und Lacke, Klebstoffe und kosmetische Zubereitungen geeignet. Ganz besonders sind die erfindungsgemäßen Verbindungen der allgemeinen Formel II beziehungsweise die Verwendung technischer Mischungen, die diese Verbindungen enthalten, als Zusatzstoffe für Automobillacke, Industrielacke und Druckfarben geeignet.

### Ausführungsbeispiele

### Allgemeines

### Siloxane

In den Fällen von Ausführungsbeispielen, in denen von einem Cyclengemisch die Rede ist, handelt es sich um Gemische bestehend aus Heptamethylcyclotetrasiloxan, Nonamethylcyclopentasiloxan, Undecamethylcyclohexasiloxan, Octamethylcyclotetrasiloxan und Decamethylcyclopentasiloxan, wobei die reaktiven Siloxane im folgenden Molverhältnis vorliegen:
Heptamethylcyclotetrasiloxan 47 %
Nonamethylcyclopentasiloxan 41 %
Undecamethylcyclohexasiloxan 12 %.

### Alkohole

Die Polyetheralkohole werden vor dem Einsatz durch eine Destillation im Vakuum von allen flüchtigen Bestandteilen befreit.

### Reaktionsführung

Alle Reaktionen werden unter Schutzgas ausgeführt. Bei der Reaktion entsteht Wasserstoff, der über einen Blasenzähler abgeleitet wird. Das Verhältnis von OH-Gruppen der organomodifizierenden Gruppen zu Silanwasserstoff kann beliebig, vorzugsweise im Bereich von 0,5 bis 2, besonders bevorzugt im Bereich von 1 bis 1,5 gewählt werden.

### Aufarbeitung

Falls nicht anders beschrieben, wählt man folgende Standardaufarbeitung: Nach beendeter Reaktion wird die Reaktionsmischung bei einer Temperatur von 130°C unter vermindertem Druck, vorzugsweise 20 bis 30 mbar von flüchtigen Stoffen befreit.

### Analysen

Der Umsatz wird durch die Bestimmung der Rest SiH-Funktionen mittels einer gasvolumetrischen Wasserstoffbestimmung [Umsatzangabe in %] ermittelt. Die OH-Zahl wird durch die Reaktion von Phthalsäureanydrid mit freien Hydroxygruppen ermittelt. Die freie Säure wird mit einer Basenlösung zurücktitriert [OH-Zahl angegeben in mg KOH/g Prüfsubstanz]. Das Vorliegen der entsprechenden Si-O-C-Verknüpfung wird jeweils durch eine ²⁹Si-NMR-spektroskopische Untersuchung des Reaktionsprodukts belegt.

Umsetzungen cyclischer Wasserstoffsiloxane mit Alkoholen in einer dehydrogenativen Kondensation:

### Synthesen

### Beispiel 1

Umsetzung von Heptamethylcyclotetrasiloxan mit einem Polyestermonool:

Umgesetzt werden 25,2 g des von der Fa. Daicel erhältlichen Polycaprolactons Placcel FA 3 (v = 3) mit einer OH-Zahl von 122,5 mit 0,05 mol Heptamethylcyclotetrasiloxan. Der Polyester wird vorgelegt, auf 90°C erhitzt und mit 50 mg Tris(perfluortriphenyl)boran und dem Siloxan versetzt. Anschließend wird auf 110°C erhitzt, wobei ein Gas entsteht, welches kontrolliert abgeleitet wird. Nachdem die gasvolumetrische Wasserstoffbestimmung einen quantitativen Umsatz ergibt, wird das Reaktionsprodukt, wie oben beschrieben, aufgearbeitet.

### Beispiel 2

Umsetzung von einem Cyclengemisch mit einem Butylalkohol gestarteten, rein Propylenoxid(PO)-Einheiten-haltigen Polyether:

Umgesetzt wird das Cyclengemisch (entsprechend 0,24 mol SiH) mit 0,31 mol eines mit Butylalkohol gestarteten, rein POhaltigen Polyethers (mittlere Molmasse von 1800 g/mol). Der Polyether wird vorgelegt, auf 100°C erhitzt und mit 690 mg Tris(perfluortriphenyl)boran versetzt. Das Siloxan wird bei 100°C innerhalb von 140 min zugetropft. Hierbei entsteht ein Gas, welches kontrolliert abgeleitet wird. Die gasvolumetrische Wasserstoffbestimmung ergibt einen quantitativen Umsatz. Das Reaktionsprodukt wird, wie oben beschrieben, aufgearbeitet.

### Beispiel 3

Umsetzung von einem Cyclengemisch mit einem Butylalkohol gestarteten, Ethylenoxid(EO)- und Propylenoxid(PO)-Einheitenhaltigen Polyether:

Umgesetzt wird das Cyclengemisch (entsprechend 0,26 mol SiH) mit 0,34 mol eines mit Butylalkohol gestarteten, EO/PO-haltigen Polyethers (mittlere Molmasse von 900 g/mol, ca. 70 % EO, 30 % PO). Der Polyether wird vorgelegt, auf 60°C erhitzt und mit 230 mg Tris(perfluortriphenyl)boran versetzt. Das Siloxan wird bei 90°C innerhalb von 2 h zugetropft. Im Verlauf des Zutropfens werden weitere 230 mg Tris(perfluortriphenyl)boran zugesetzt. Hierbei entsteht ein Gas, welches kontrolliert abgeleitet wird. Die gasvolumetrische Wasserstoffbestimmung ergibt einen 97 %igen Umsatz. Das Reaktionsprodukt wird, wie oben beschrieben, aufgearbeitet.

### Beispiel 4

Umsetzung von einem Cyclengemisch mit einem Butylalkohol gestarteten, Ethylenoxid(EO)- und Propylenoxid(PO)-Einheitenhaltigen Polyether:

Umgesetzt wird das Cyclengemisch (entsprechend 0,26 mol SiH) mit 0,34 mol eines mit Butylalkohol gestarteten, EO/PO-haltigen Polyethers (mittlere Molmasse von 1000 g/mol, ca. 70 % EO, 30 % PO). Der Polyether wird vorgelegt, auf 60°C erhitzt und mit 500 mg Tris(perfluortriphenyl)boran versetzt. Das Siloxan wird bei 90°C innerhalb von 2 h zugetropft. Hierbei entsteht ein Gas, welches kontrolliert abgeleitet wird. Die gasvolumetrische Wasserstoffbestimmung ergibt einen quantitativen Umsatz. Das Reaktionsprodukt wird, wie oben beschrieben, aufgearbeitet.

### Beispiel 5

Umsetzung von einem Cyclengemisch mit einem Butylalkohol gestarteten, Ethylenoxid(EO)- und Propylenoxid(PO)-Einheitenhaltigen Polyether:

Umgesetzt wird das Cyclengemisch (entsprechend 0,40 mol SiH) mit 0,52 mol eines mit Butylalkohol gestarteten, EO/PO-haltigen Polyethers (mittlere Molmasse von 500 g/mol, ca. 20 EO, 80 % PO). Der Polyether wird vorgelegt, auf 100°C erhitzt und mit 600 mg Tris(perfluortriphenyl)boran versetzt. Das Siloxan wird bei 100°C innerhalb von 2,5 h zugetropft. Hierbei entsteht ein Gas, welches kontrolliert abgeleitet wird. Die gasvolumetrische Wasserstoffbestimmung ergibt einen quantitativen Umsatz. Das Reaktionsprodukt wird, wie oben beschrieben, aufgearbeitet.

### Beispiel 6

Umsetzung von einem Cyclengemisch mit einem Butylalkohol gestarteten, Ethylenoxid(EO)- und Propylenoxid(PO)-Einheitenhaltigen Polyether:

Umgesetzt wird das Cyclengemisch (entsprechend 0,40 mol SiH) mit 0,52 mol eines mit Butylalkohol gestarteten, EO/PO-haltigen Polyethers (mittlere Molmasse von 1400 g/mol, ca. 40 % EO, 60 % PO). Der Polyether wird vorgelegt, auf 100°C erhitzt und mit 710 mg Tris(perfluortriphenyl)boran versetzt. Das Siloxan wird bei 100°C innerhalb von 2,5 h zugetropft. Hierbei entsteht ein Gas, welches kontrolliert abgeleitet wird. Die gasvolumetrische Wasserstoffbestimmung ergibt einen 98 %igen Umsatz. Das Reaktionsprodukt wird, wie oben beschrieben, aufgearbeitet.

### Beispiel 7

Umsetzung von einem Cyclengemisch mit einem Butylalkohol gestarteten, rein Ethylenoxid(EO)-Einheiten-haltigen Polyether:

Umgesetzt wird das Cyclengemisch (entsprechend 0,33 mol SiH) mit 0,36 mol eines mit Butylalkohol gestarteten, rein EOhaltigen Polyethers (mittlere Molmasse von 500 g/mol). Der Polyether wird vorgelegt, auf 100°C erhitzt und mit 430 mg Tris(perfluortriphenyl)boran versetzt. Das Siloxan wird bei 110°C innerhalb von 3 h zugetropft. Hierbei entsteht ein Gas, welches kontrolliert abgeleitet wird. Die gasvolumetrische Wasserstoffbestimmung ergibt einen quantitativen Umsatz. Das Reaktionsprodukt wird, wie oben beschrieben, aufgearbeitet.

### Beispiel 8

Umsetzung von einem Cyclengemisch mit einem Allylalkohol gestarteten, Ethylenoxid(EO)- und Propylenoxid(PO)-Einheitenhaltigen Polyether:

Umgesetzt wird das Cyclengemisch (entsprechend 0,40 mol SiH) mit 0,52 mol eines mit Allylalkohol gestarteten, EO/PO-haltigen Polyethers (mittlere Molmasse von 500 g/mol, ca. 60 % EO, 40 % PO). Der Polyether wird vorgelegt, auf 100°C erhitzt und mit 500 mg Tris(perfluortriphenyl)boran versetzt. Das Siloxan wird bei 100°C innerhalb von 2,5 h zugetropft. Hierbei entsteht ein Gas, welches kontrolliert abgeleitet wird. Die gasvolumetrische Wasserstoffbestimmung ergibt einen 97 %igen Umsatz. Das Reaktionsprodukt wird, wie oben beschrieben, aufgearbeitet.

### Beispiel 9

Umsetzung von einem Cyclengemisch mit einem Allylalkohol gestarteten, rein Ethylenoxid(EO)-Einheiten-haltigen Polyether:

Umgesetzt wird das Cyclengemisch (entsprechend 0,33 mol SiH) mit 0,36 mol eines mit Allylalkohol gestarteten, rein EOhaltigen Polyethers (mittlere Molmasse von 500 g/mol). Der Polyether wird vorgelegt, auf 100°C erhitzt und mit 430 mg Tris(perfluortriphenyl)boran versetzt. Das Siloxan wird bei 110°C innerhalb von 3,5 h zugetropft. Hierbei entsteht ein Gas, welches kontrolliert abgeleitet wird. Die gasvolumetrische Wasserstoffbestimmung ergibt einen 99 %igen Umsatz. Das Reaktionsprodukt wird, wie oben beschrieben, aufgearbeitet.

### Beispiel 10

Umsetzung von einem Cyclengemisch mit einem Butylalkohol gestarteten, Ethylenoxid(EO)- und 1-Dodecenoxid(DO)-Einheitenhaltigen Polyether:

Umgesetzt wird das Cyclengemisch (entsprechend 0,20 mol SiH) mit 0,26 mol eines mit Butylalkohol gestarteten, EO/DO-haltigen Polyethers (mittlere Molmasse von 500 g/mol, ca. 90 % EO, 10 % DO). Der Polyether wird vorgelegt, auf 100°C erhitzt und mit 400 mg Tris(perfluortriphenyl)boran versetzt. Das Siloxan wird bei 100°C innerhalb von 2 h zugetropft. Hierbei entsteht ein Gas, welches kontrolliert abgeleitet wird. Die gasvolumetrische Wasserstoffbestimmung ergibt einen 95 %igen Umsatz. Das Reaktionsprodukt wird, wie oben beschrieben, aufgearbeitet.

### Beispiel 11

Umsetzung von einem Cyclengemisch mit einem Butylalkohol gestarteten, Ethylenoxid(EO)- und Styroloxid(SO)-Einheitenhaltigen Polyether:

Umgesetzt wird das Cyclengemisch (entsprechend 0,20 mol SiH) mit 0,26 mol eines mit Butylalkohol gestarteten, EO/SO-haltigen Polyethers (mittlere Molmasse von 800 g/mol, ca. 90 % EO, 10 % SO). Der Polyether wird vorgelegt, auf 110°C erhitzt und mit 400 mg Tris(perfluortriphenyl)boran versetzt. Das Siloxan wird bei 110°C innerhalb von 3 h zugetropft. Hierbei entsteht ein Gas, welches kontrolliert abgeleitet wird. Die gasvolumetrische Wasserstoffbestimmung ergibt einen 99 %igen Umsatz. Das Reaktionsprodukt wird, wie oben beschrieben, aufgearbeitet.

### Beispiel 12

Umsetzung von einem Cyclengemisch mit einem Butylalkohol gestarteten, Ethylenoxid(EO)- und 1-Butenoxid(BO)-Einheitenhaltigen Polyether:

Umgesetzt wird das Cyclengemisch (entsprechend 0,20 mol SiH) mit 0,26 mol eines mit Butylalkohol gestarteten, EO/BO-haltigen Polyethers (mittlere Molmasse von 400 g/mol, ca. 90% EO, 10% BO). Der Polyether wird vorgelegt, auf 100°C erhitzt und mit 400 mg Tris(perfluortriphenyl)boran versetzt. Das Siloxan wird bei 100°C innerhalb von 2 h zugetropft. Hierbei entsteht ein Gas, welches kontrolliert abgeleitet wird. Die gasvolumetrische Wasserstoffbestimmung ergibt einen 98 %igen Umsatz. Das Reaktionsprodukt wird, wie oben beschrieben, aufgearbeitet.

### Vergleichsbeispiel 1

Nach den im Stand der Technik bekannten Methoden wird ein Heptamethyltrisiloxan mit einem Allylalkohol gestarteten Polyether mit einem PO-Gehalt von 30 % und EO-Gehalt von 70 % und einer mittleren Molmasse von 900 g/mol mit einem geeigneten Pt-Katalysator zum entsprechenden Polyethersiloxan umgesetzt.

### Vergleichsbeispiel 2

Nach den im Stand der Technik bekannten Methoden wird das Cyclengemisch mit einem Allylalkohol gestarteten Polyether mit einem PO-Gehalt von 30 % und EO-Gehalt von 70 % und einer mittleren Molmasse von 500 g/mol mit einem geeigneten Pt-Katalysator zum entsprechenden Polyethersiloxan umgesetzt.

### Vergleichsbeispiel 3

Nach den im Stand der Technik bekannten Methoden wird das Cyclengemisch mit einem Allylalkohol gestarteten und mit einem Methylgruppe endverkappten Polyether mit einem PO-Gehalt von 30 % und EO-Gehalt von 70 % und einer mittleren Molmasse von 500 g/mol mit einem geeigneten Pt-Katalysator zum entsprechenden Polyethersiloxan umgesetzt.

### Beispiele für die Herstellung von Polyesterpolyurethan-Weichschaum

### Rohstoffe

### Desmophen 2200 von Bayer

Toluylendiisocyanat (TDI 80/20 und TDI 65/35) von Bayer, N-Methylmorpholin (NMM).

### Formulierung

100 Teile Polyesterpolyol
34,5 Teile TDI 80
23 Teile TDI 65
5,1 Teile Wasser
1,4 Teile NMM, 0,195 Teile (oder mehr) Siloxan.

Hierbei wird aus Wasser, Amin und Siloxan eine Aktivatorlösung hergestellt unter Zugabe von 1,1 Teilen eines Polyethers mit 90 % PO und 10 % EO und einer mittleren Molmasse von 2000 g/mol als Lösungsvermittler.

Die Verschäumung wird auf einer Hochdruckmaschine der Firma Hennecke, Modell UBT, mit einem Ausstoß von 4 kg/min vorgenommen. Es werden das Polyol, die Isocyanate und die Aktivatorlösung getrennt dosiert. Das Reaktionsgemisch wird in einen mit Papier ausgekleideten Behälter mit einer Grundfläche von 30 x 30 cm dosiert. Man bestimmt die Steighöhe und den Rückfall. Als Rückfall wird die Abnahme der Steighöhe 1 min nach Erreichen der maximalen Steighöhe bezeichnet.

Nach Aushärten der Schäume werden die Zellenzahl und die Luftdurchlässigkeit bestimmt. Die Luftdurchlässigkeit ist ein Maß für den Anteil an offenen Zellen im Schaum. Für viele Anwendungen wird ein möglichst offenzelliger Schaum gewünscht. Die Offenzelligkeit der Schäume wird hier über die Luftdurchlässigkeit bestimmt. Die Luftdurchlässigkeit ist angegeben in mm Staudruck Wassersäule, welcher sich aufbaut, wenn ein konstanter Luftstrom durch den Schaum geleitet wird. Je höher der angegebene Wert, desto geschlossenzelliger ist der Schaum und umgekehrt.

In der folgenden Tabelle sind die Ergebnisse der Verschäumungen von erfindungsgemäßen Siloxanen (Beispiele 13 bis 17) und von nicht erfindugsgemäßen Siloxanen des Standes der Technik (Vergleichsbeispiele 4 und 5) zusammengefasst.

Es werden das Siloxan, die verwendete Menge (in Teilen), die Schaumhöhe (cm), der Rückfall (cm), die Luftdurchlässigkeit (mm) und die Zellenzahl (cm⁻¹) der erhaltenen Schäume dargestellt.

**Tabelle 1**

| | Siloxan | Menge | Schaumh. | Rückf. | Luftd. | Zellenz. | Bemerkungen |
|---|---|---|---|---|---|---|---|
| | aus | (Teile) | (cm) | (cm) | (mm) | (cm⁻¹) | |
| Bsp. 13 | Bsp. 3 | 0,195 | 29,2 | 1,3 | 11 | 13 | fehlerfrei |
| Bsp. 14 | Bsp. 4 | 0,195 | 28,9 | 1,5 | 12 | 13 | fehlerfrei |
| Bsp. 15 | Bsp. 5 | 0,195 | 29,2 | 1,3 | 17 | 12 | fehlerfrei |
| Bsp. 16 | Bsp. 6 | 0,195 | 28,6 | 1,2 | 15 | 13 | fehlerfrei |
| Bsp. 17 | Bsp. 8 | 0,195 | 29 | 1,5 | 10 | 13 | fehlerfrei |
| Vgl. 4 | Vgl. 1 | 0,39 | 28,7 | 2,6 | 12 | 12 | Risse |
| Vgl. 5 | Vgl. 1 | 0,195 | - | - | - | - | Kollaps |

### Beispiele für die Wirksamkeitsverstärkung von Pflanzenschutzmitteln

### Beispiele 18 und 19

In einem Gewächshaus wird die Gerstensorte "Ingrid" (3 Pflanzen je Topf) in Pflanzerde "Frutosol" ausgesät. Drei Wochen später wurden die ca. 10 bis 15 cm langen Blätter der Pflanzen mit frischen Konidien des Mehltau-Pilzes *Blumeria graminis f. sp. hordei* (Rasse A6) mittels eines Inokulationsturmes beimpft. Zwei Tage später werden sie mit einer Spritzbrühe, welche das Fungizid Opus^{®} (BASF, mit 125 g Wirkstoff/l Epoxiconazol) enthält, besprüht. Die Sprühmenge entspricht 250 l/ha. Dies wird ebenso in anderen Varianten durchgeführt, in denen die Spritzbrühe neben Opus^{®} auch verschiedene Netzmittel enthält. Die Dosierungen des Pestizids und der Netzmittel sind in der Tabelle der Ergebnisse angegeben. Nachdem der Sprühfilm getrocknet ist, werden 8 cm lange Blattsegmente von den behandelten und auch von völlig unbehandelten Pflanzen herausgeschnitten und für jede Variante separat 13 Blätter auf Benzimidazol-Agar in Petrischalen gelegt (0,5 % Agar zu dem 40 ppm Benzimidazol nach Sterilisierung hinzugefügt werden). Nach 7, 14 und 21 Tagen Inkubierung bei Raumtemperatur wird die Erkrankung mit Mehltau untersucht, indem der Anteil an infizierter Blattfläche abgeschätzt wird. Diese Versuchsanstellung ist dem Fachmann geläufig.

Die Wirksamkeit des Pestizids und der Kombination aus Pestizid und Netzmittel wird auf der dem Fachmann bekannten Weise im Vergleich zu einer unbehandelten, aber mit dem Mehltaupilz beimpften Kontrollprobe beurteilt.

**Tabelle 2**

| | Behandlung | Wirksamkeit |
|---|---|---|
| Vgl. 6 | Opus^{®} [10 ml/ha] | 59 % |
| Bsp. 18 | Opus^{®} [10 ml/ha] + 25 ml/ha Bsp. 7 | 74 % |
| Bsp. 19 | Opus^{®} [10 ml/ha] + 25 ml/ha Bsp. 9 | 78 % |
| Vgl. 7 | Opus^{®} [10 ml/ha] + 25 ml/ha Vgl. 2 | 62 % |
| Vgl. 8 | Opus^{®} [10 ml/ha] + 25 ml/ha Vgl. 3 | 45 % |
| Vgl. 9 | Opus^{®} [10 ml/ha] + 25 ml Break-Thru S 240 | 75 % |

Die Sporen des Pilzes haben das Blattgewebe schon infiziert als die Pflanzen besprüht wurden. Zur Kontrolle der Krankheit muss also das Fungizid in das Blatt eindringen, um das Pilzwachstum zu beeinträchtigen. Der Vergleich der erfindungsgemäßen Beispiele 18 und 19 mit dem Vergleichsbeispiel 6 (behandelte Kontrollprobe ohne Netzmittel) zeigt, dass erfindungsgemäße Verbindungen der allgemeinen Formel II die biologische Aktivität von Pflanzenschutzmitteln drastisch erhöhen. Überraschenderweise wurde gefunden, dass die Aktivität der erfindungsgemäßen Verbindung aus Beispiel 9 sogar noch höher liegt als die Aktivität des für eine solche Anwendung kommerziell erhältlichen Trisiloxan-Netzmittels BREAK-THRU^{®} S 240 (Degussa Goldschmidt GmbH). Dieses Trisiloxan-Tensid besitzt eine nichtcyclische, lineare Struktur und ist seitenständig, das heißt am mittleren der drei Siliciumatome, modifiziert.

### Beispiele 20 bis 23:

In einem Feldversuch mit Mais werden Parzellen von 21 m² in vier Mal wiederholten Blöcken randomisiert verteilt. Die vier Parzellen jeder Behandlung werden ohne oder mit Herbizid oder mit den in den in der Tabelle 3 angegebenen Kombinationen an Netzmitteln besprüht, als der Mais im Wachstumsstadium 17 (BBCH Skala). Zu dieser Zeit sind als Begleitwuchs das Gras *Echinocloa cruz-galli* (Wachstumsstadium 25) und das Unkraut *Chenopodium album* (Wachstumsstadium 19) vorherrschend. Die Produkte werden mit Wasser verdünnt und mit einer Wassermenge von 250 l/ha mittels einer Düse bei einem Druck von 1,7 bar ausgebracht. Eine Herbizidmischung von Mikado^{®} (SC 300 g/l Sulcotrion, 0,5 l/ha) und Motivell^{®} (SC 40 g/l Nicosulfuron, 0,5 l/ha) wird ohne Netzmittel oder in Kombination mit 100 und 200 ml/ha der erfindungsgemäßen Beispiele 7 und 9 oder dem kommerziell erhältlichen Netzmittel BREAK-THRU^{®} S 240 (BT S 240, Degussa Goldschmidt GmbH) appliziert. Der Grad der Unkrautbekämpfung wird 52 Tage nach der Behandlung auf der dem Fachmann bekannten Weise bestimmt, indem die Unkrautbiomasse in den behandelten Parzellen zur Unkrautbiomasse in unbehandelten Parzellen auf der dem Fachmann bekannten Weise ins Verhältnis gesetzt und dabei der Wirkungsgrad in Prozent geschätzt wird. Die auf vier Wiederholungen gemittelte Wirksamkeit der Unkrautbekämpfung wird in der Tabelle 3 angegeben. Die Wirksamkeitsangaben mit verschiedenen Buchstaben a und b unterscheiden sich statistisch signifikant mit P = 0,05 %; solche Werte mit demselben Buchstaben unterscheiden sich statistisch nicht signifikant mit P = 0,05 %. Die Ergebnisse zeigen, dass erfindungsgemäße Verbindungen der allgemeinen Formel II signifikant die Wirksamkeit von Herbiziden verbessern, selbst wenn diese schon mit beispielsweise 100 ml/ha sehr niedrig dosiert werden.

**Tabelle 3**

| | Behandlung | Wirksamkeit | Signifikanz |
|---|---|---|---|
| Vgl. 10 | Mikado^{®} + Motivell^{®} | 78,8 % | b |
| Bsp. 20 | Mikado^{®} + Motivell^{®} + 100 ml/ha Beispiel 7 | 85,2 % | a |
| Bsp. 21 | Mikado^{®} + Motivell^{®} + 200 ml/ha Beispiel 7 | 87,1 % | a |
| Bsp. 22 | Mikado^{®} + Motivell^{®} + 100 ml/ha Beispiel 9 | 86,8 % | a |
| Bsp. 23 | Mikado^{®} + Motivell^{®} + 200 ml/ha Beispiel 9 | 88,0 % | a |
| Vgl. 11 | Mikado^{®} + Motivell^{®} + 100 ml/ha BT S 240 | 82,3 % | ab |
| Vgl. 12 | Mikado^{®} + Motivell^{®} + 200 ml/ha BT S 240 | 86,3 % | a |

Aus den Versuchen kann geschlossen werden, dass die erfindungsgemäßen Verbindungen der allgemeinen Formel II die Bioaktivität von Fungiziden und Herbiziden verbessern und somit als Bioaktivatoren und Wirksamkeitsverstärker dienen. Aufgrund der Konsistenz der Wirkungen liegt es nahe, dass die erfindungsgemäßen Verbindungen der allgemeinen Formel II alle Biozide in ihrer Wirksamkeit verstärken.

## Patentansprüche

1. Cyclische Siloxane der allgemeinen Formel II 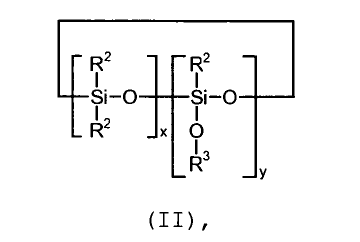 wobei
R² gleiche oder verschiedene, geradkettige oder ver- zweigte, aliphatische oder aromatische, gegebenenfalls halogenierte, gegebenenfalls ungesättigte Kohlen- wasserstoffreste mit 1 bis 8 Kohlenstoffatomen, sind,
x 3, 4 oder 5,
y 1, 2 oder 3,
R³ eine Gruppe der Formel A-B-C-D darstellt, wobei
A eine Gruppe 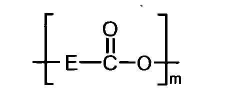
ist, wobei
m eine ganze Zahl von 0 bis 30 ist und
E jeweils unabhängig eine zweiwertige Gruppe, ausgewählt aus linearen oder verzweigten, gesättigten, ein- oder mehrfach ungesättigten Alkyl-, Aryl-, Alkylaryl- oder Arylalkylgruppen mit 1 bis 20 Kohlenstoffatomen sein kann,
B eine Gruppe der allgemeinen Formel III
-(C₂H₄O)ₙ(C₃H₆O)ₒ(C₁₂H₂₄O)ₚ(C₈H₈O)_{q}(C₄H₈O)ᵣ- (III)
ist, wobei
n, o, p, q und r voneinander unabhängige ganze Zahlen von 0 bis 50 sind, und falls mehr als einer der Indices n, o, p, q, r > 0 ist, die allgemeine Formel III ein statistisches Oligomer oder ein Blockoligomer darstellt,
C ausgewählt aus der Gruppe 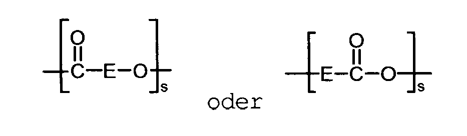
ist, wobei
E jeweils unabhängig die oben angegebenen Bedeutungen haben kann und
s eine ganze Zahl von 0 bis 20 ist, aber nur dann von 0 verschieden ist, falls die Summe der Indizes n + o + p + q + r größer oder gleich 1 ist,
und
D ein Rest sein kann, ausgewählt aus Wasserstoff, line- aren oder verzweigten, gesättigten, ein- oder mehrfach ungesättigten Alkyl-, Aryl-, Alkylaryl- oder Arylal- kylgruppen mit 1 bis 20 Kohlenstoffatomen, gegebenen- falls ein oder mehrere Heteroatome enthaltend, ge- gebenenfalls ein oder mehrere Carbonylgruppen ent- haltend, gegebenenfalls mit einer ionischen organi- schen Gruppe modifiziert, die beispielsweise die Hete- roatome Schwefel, Phosphor und/oder Stickstoff ent- halten kann,
wobei die Summe der Indizes m + n + o + p + q + r + s größer oder gleich 3 sein muss.

2. Cyclische Siloxane nach Anspruch 1, **dadurch gekennzeichnet, dass** die Summe der Indizes n + o größer oder gleich 3 sein muss, und dass R² für eine Methylgruppe steht.

3. Cyclische Siloxane nach mindestens einem der Ansprüche 1 bis 2, **dadurch gekennzeichnet, dass** y den Wert 1 hat.

4. Cyclische Siloxane nach mindestens einem der Ansprüche 1 bis 3, **dadurch gekennzeichnet, dass** m = s = 0 ist.

5. Cyclische Siloxane nach mindestens einem der Ansprüche 1 bis 4, **dadurch gekennzeichnet, dass** der Rest D ausgewählt wird aus der aus
| | | |
|---|---|---|
| -CH₃ | | 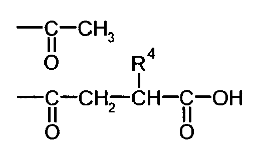 |
| -(CH₂)₃-CH₃ | | |
| -CH₂-CH=CH₂ | | |
| -SO₃H | | 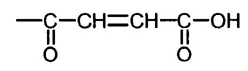 |
| -SO₃⁻ | ¹/_{w} M^{w+} | |
| -(CH₂)₂-SO₃⁻ | ¹/_{w} M^{w+} | 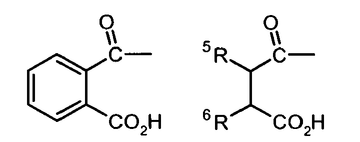 |
| -(CH₂)₃-SO₃⁻ | ¹/_{w} M^{w+} | |
| -(CH₂)₄-SO₃⁻ | ¹/_{w} M^{w+} | |
| -PO₃²⁻ | ²/_{w} M^{w+} | 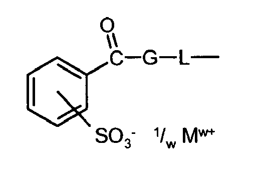 |
| -PO₃H⁻ | ¹/_{w} M^{w+} | |
| -PO₃H₂ | | |
bestehenden Gruppe, wobei
M^{w+} für ein w-wertiges Kation mit w = 1, 2, 3, oder 4 steht, insbesondere K⁺, Na⁺, NH₄⁺, (i-C₃H₇)NH₃⁺ oder (CH₃)₄N⁺, und
R⁴ für Wasserstoff oder einen, gegebenenfalls verzweigten aliphatischen Rest mit 1 bis 20 Kohlenstoffatomen steht,
R⁵ und R⁶ für gleiche oder verschiedene, gegebenenfalls verbrückte, gegebenenfalls verzweigte aliphatische Reste stehen,
G ein Sauerstoffatom, NH oder eine NR⁷ Gruppe ist, wobei
R⁷ eine einwertige Alkylgruppe ist, und
L einen zweiwertigen, gegebenenfalls verzweigten, Alkyl- rest darstellt.

6. Cyclische Siloxane nach mindestens einem der Ansprüche 1 bis 4, **dadurch gekennzeichnet, dass** der Rest D ausgewählt wird aus der aus
-CH₃
-(CH₂)₃-CH₃
-CH₂-CH=CH₂
-SO₃^{- 1}/_{w} M^{w+}
-(CH₂)₂-SO₃^{- 1}/_{w} M^{w+}
-(CH₂)₃-SO₃^{- 1}/_{w} M^{w+}
bestehenden Gruppe wobei
M^{w+} für ein w-wertiges Kation mit w = 1, 2, 3, oder 4 steht, insbesondere K⁺, Na⁺, NH₄⁺, (i-C₃H₇)NH₃⁺ oder (CH₃)₄N⁺ steht.

7. Cyclische Siloxane nach mindestens einem der Ansprüche 1 bis 4, **dadurch gekennzeichnet, dass** der Rest D ausgewählt wird aus der aus Allyl, n-Butyl, Ethyl und Methyl bestehenden Gruppe.

8. Verwendung eines cyclischen Siloxans nach mindestens einem der Ansprüche 1 bis 7 zur Herstellung von Polyesterpolyurethanschäumen.

9. Polyesterpolyurethanschäume hergestellt nach Anspruch 8, **dadurch gekennzeichnet, dass** als Additive Flammschutzmittel, Zellöffner, Farbstoffe, UV-Stabilisatoren oder Substanzen zur Verhinderung eines mikrobiellen Befalls verwendet werden.

10. Polyesterpolyurethanschäume hergestellt nach Anspruch 8.

11. Verwendung eines cyclischen Siloxans nach mindestens einem der Ansprüche 1 bis 7 zur Verstärkung der Wirkung von Bioziden.

## Claims

1. Cyclic siloxanes of the general formula II 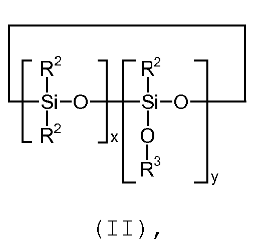 in which
R² are identical or different, straight-chain or branched, aliphatic or aromatic, optionally halogenated, optionally unsaturated hydrocarbon radicals having 1 to 8 carbon atoms,
x is 3, 4 or 5,
y is 1, 2 or 3,
R³ represents a group of the formula A-B-C-D, where
A is a group 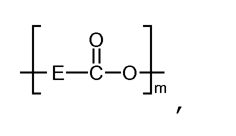
where
m is an integer from 0 to 30 and
E may be in each case independently a divalent group selected from among linear or branched, saturated, mono- or polyunsaturated alkyl, aryl, alkylaryl or arylalkyl groups having 1 to 20 carbon atoms,
B is a group of the general formula (III)
-(C₂H₄O)ₙ(C₃H₆O)ₒ(C₁₂H₂₄O)ₚ(C₈H₈O)_{q}(C₄H₈O)ᵣ- (III)
where
n, o, p, q and r independently of one another are integers from 0 to 50 and, if more than one of the indices n, o, p, q, r > 0, the general formula III represents a random oligomer or a block oligomer,
C is selected from the group consisting of 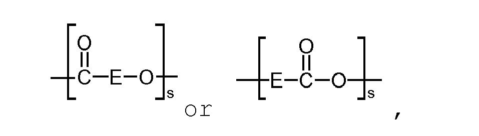
where
E in each case independently of one another can have the abovementioned meanings and
s is an integer from 0 to 20, but only other than 0 when the total of the indices n + o + p + q + r is 1 or greater,
and
D can be a radical selected from among hydrogen, linear or branched, saturated, mono- or polyunsaturated alkyl, aryl, alkylaryl or arylalkyl groups having 1 to 20 carbon atoms, optionally comprising one or more heteroatoms, optionally comprising one or more carbonyl groups, optionally modified with an ionic organic group which may comprise for example the heteroatoms of sulfur, phosphorus and/or nitrogen,
where the total of the indices m + n + o + p + q + r + s must be 3 or greater.

2. Cyclic siloxanes according to Claim 1, **characterized in that** the total of the indices n + o must be 3 or greater, and **in that** R² represents a methyl group.

3. Cyclic siloxanes according to at least one of Claims 1 to 2, **characterized in that** y has the value 1.

4. Cyclic siloxanes according to at least one of Claims 1 to 3, **characterized in that** m = s = 0.

5. Cyclic siloxanes according to at least one of Claims 1 to 4, **characterized in that** the radical D is selected from the group consisting of
| | | | |
|---|---|---|---|
| | -CH₃ | | 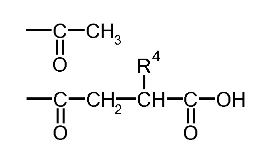 |
| | -(CH₂)₃-CH₃ | | |
| | -CH₂-CH=CH₂ | | |
| | -SO₃H | | 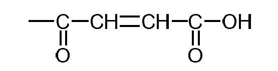 |
| -SO₃⁻ | | ¹/_{w} M^{w+} | |
| -(CH₂)₂-SO₃⁻ | | ¹/_{w} M^{w+} | 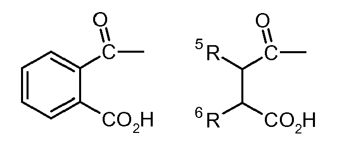 |
| -(CH₂)₃-SO₃⁻ | | ¹/_{w} M^{w+} | |
| -(CH₂)₄-SO₃⁻ | | ¹/_{w} M^{w+} | |
| -PO₃²⁻ | | ²/_{w} M^{w+} | 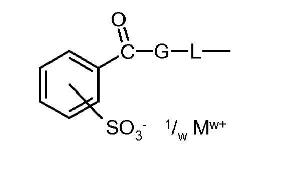 |
| -PO₃H⁻ | | ¹/_{w} M^{w+} | |
| -PO₃H₂ | | | |
where
M^{w+} represents a w-valent cation with w = 1, 2, 3 or 4, in particular K⁺, Na⁺, NH₄⁺, (i-C₃H₇)NH₃⁺ or (CH₃)₄N⁺, and
R⁴ represents hydrogen or an optionally branched aliphatic radical having 1 to 20 carbon atoms,
R⁵ and R⁶ represent identical or different, optionally bridged, optionally branched, aliphatic radicals,
G is an oxygen atom, NH or an NR⁷ group, where
R⁷ is a monovalent alkyl group, and
L represents a divalent, optionally branched, alkyl radical.

6. Cyclic siloxanes according to at least one of Claims 1 to 4, **characterized in that** the radical D is selected from the group consisting of
-CH₃
-(CH₂)₃-CH₃
-CH₂-CH=CH₂
-SO₃^{- 1}/_{w} M^{w+}
-(CH₂)₂-SO₃^{- 1}/_{w} M^{w+}
-(CH₂)₃-SO₃^{- 1}/_{w} M^{w+}
where
M^{w+} represents a w-valent cation with w = 1, 2, 3 or 4, in particular K⁺, Na⁺, NH₄⁺, (i-C₃H₇)NH₃⁺ or (CH₃)₄N⁺.

7. Cyclic siloxanes according to at least one of Claims 1 to 4, **characterized in that** the radical D is selected from the group consisting of allyl, n-butyl, ethyl and methyl.

8. Use of a cyclic siloxane according to at least one of Claims 1 to 7 for the preparation of polyesterpolyurethane foams.

9. Polyesterpolyurethane foams prepared as described in Claim 8, **characterized in that** flame retardants, cell openers, colorants, UV stabilizers or substances for preventing microbial attack are used as additives.

10. Polyesterpolyurethane foams prepared as described in Claim 8.

11. Use of a cyclic siloxane according to at least one of Claims 1 to 7 for enhancing the activity of biocides.

## Revendications

1. Siloxanes cycliques de formule générale II 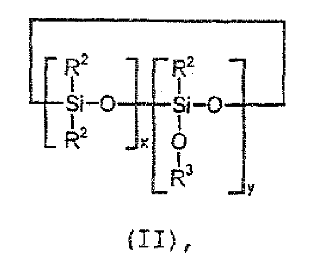 dans laquelle
R² sont des radicaux hydrocarbonés identiques ou ou différents, à chaîne droite ou ramifiée, aliphatiques aromatiques, éventuellement halogénés, éventuellement insaturés, ayant de 1 à 8 atomes de carbone,
x vaut 3, 4 ou 5,
y vaut 1, 2 ou 3,
R³ représente un groupe de formule A-B-C-D, où
A est un groupe 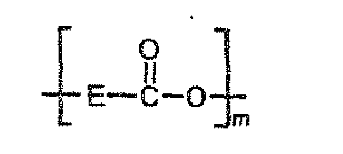
m étant un nombre entier valant de 0 à 30,
E pouvant être chaque fois indépendamment un groupe divalent, choisi parmi des groupes alkyle, aryle, alkylaryle ou arylalkyle linéaires ou ramifiés, saturés, une ou plusieurs fois insaturés, ayant de 1 à 20 atomes de carbone
B est un groupe de formule générale III
-(C₂H₄O)ₙ(C₃H₆O)ₒ(C₁₂H₂₄O)ₚ(C₆H₈O)_{q}(C₄H₈O)ᵣ- (III)
où
n, o, p, q et r sont, indépendamment les uns des autres, des nombres entiers valant de 0 à 50, et si plus d'un des indices n, o, p, q, r est > 0, la formule générale III représente un oligomère statistique ou un oligomère séquencé,
C est choisi dans l'ensemble constitué par 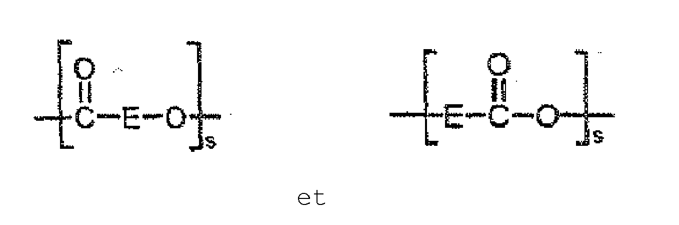 où
E peut avoir chaque fois indépendamment les significations indiquées plus haut et
s est un nombre entier valant de 0 à 20, mais n'est différent de 0 que lorsque la somme des indices n + o + p + q + r est supérieure ou égale à 1,
et
D peut être un radical choisi parmi un atome d'hydrogène, des groupes alkyle, aryle, alkylaryle, arylalkyle linéaires ou ramifiés, saturés, une ou plusieurs fois insaturés, ayant de 1 à 20 atomes de carbone, contenant éventuellement un ou plusieurs hétéroatomes, contenant éventuellement un ou plusieurs groupes carbonyle, éventuellement modifiés par un groupe organique ionique qui peut contenir par exemple les hétéroatomes de soufre, de phosphore et/ou d'azote,
la somme des indices m + n + o + p + q + r + s devant être supérieure ou égale à 3.

2. Siloxanes cycliques selon la revendication 1, **caractérisés en ce que** la somme des indices n + o doit être supérieure ou égale à 3, et **en ce que** R² représente un groupe méthyle.

3. Siloxanes cycliques selon au moins l'une des revendications 1 et 2, **caractérisés en ce que** y a la valeur 1.

4. Siloxanes cycliques selon au moins l'une des revendications 1 à 3, **caractérisés en ce que** m = s = 0.

5. Siloxanes cycliques selon au moins l'une des revendications 1 à 4, **caractérisés en ce que** le radical D est choisi dans l'ensemble constitué par
| | | | |
|---|---|---|---|
| | -CH₃ | | 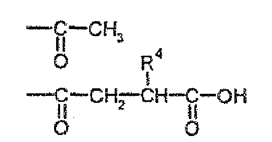 |
| | -(CH₂)₃-CH₃ | | |
| | -CH₂-CH=CH₂ | | |
| | -SO₃H | | |
| -SO₃⁻ | | ¹/_{w} M^{w+} | 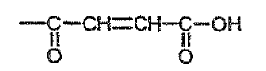 |
| -(CH₂)₂-SO₃⁻ | | ¹/_{w} M^{w+} | |
| -(CH₂)₃-SO₃⁻ | | ¹/_{w} M^{w+} | 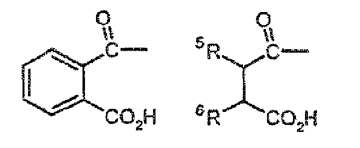 |
| -(CH₂)₄-SO₃⁻ | | ¹/_{w} M^{w+} | |
| -PO₃²⁻ | | ²/_{w} M^{w+} | |
| -PO₃H⁻ | | ¹/_{w} M^{w+} | 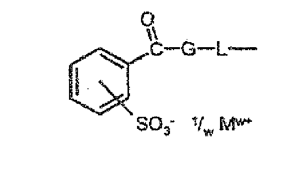 |
| -PO₃H₂ | | | |
où
M^{w+} représente un cation w-valent, w représentant 1, 2, 3 ou 4, en particulier K⁺, Na⁺, NH₄⁺, (iso-C₃H₇)NH₃⁺ ou (CH₃)₄N⁺, et
R⁴ représente un atome d'hydrogène ou un radical aliphatique éventuellement ramifié ayant de 1 à 20 atomes de carbone,
R⁵ et R⁶ représentent des radicaux aliphatiques identiques ou différents, éventuellement pontés, éventuellement ramifiés,
G représente un atome d'oxygène, NH ou un groupe NR⁷ ,
R⁷ étant un groupe alkyle monovalent, et
L représente un radical alkyle divalent, éventuellement ramifié.

6. Siloxanes cycliques selon au moins l'une des revendications 1 à 4, **caractérisés en ce que** le radical D est choisi dans l'ensemble constitué par
—CH₃
-(CH₂)₃-CH₃
-CH₂-CH=CH₂
-SO₃^{- 1}/_{w} M^{w+}
-(CH₂)₂-SO₃^{- 1}/_{w} M^{w+}
-(CH₂)₃-SO₃^{- 1}/_{w} M^{w+}
où
M^{w+} représente un cation w-valent, w représentant 1, 2, 3 ou 4, en particulier K⁺, Na⁺, NH₄⁺, (iso-C₃H₇)NH₃⁺ ou (CH₃)₄N⁺.

7. Siloxanes cycliques selon au moins l'une des revendications 1 à 4, **caractérisés en ce que** le radical D est choisi dans l'ensemble constitué par les groupes allyle, n-butyle, éthyle et méthyle.

8. Utilisation d'un siloxane cyclique selon au moins l'une des revendications 1 à 7, pour la production de mousses de polyester-polyuréthanne.

9. Mousses de polyester-polyuréthanne produites selon la revendication 8, **caractérisées en ce qu'**on utilise comme additifs des agents ignifuges, des agents d'ouverture de cellules, des colorants, des stabilisants UV ou des substances destinées à empêcher une attaque microbienne.

10. Mousses de polyester-polyuréthanne produites selon la revendication 8.

11. Utilisation d'un siloxane cyclique selon au moins l'une des revendications 1 à 7, pour renforcer l'action de biocides.
